# EUROPEAN PATENT SPECIFICATION

(11) **EP 1 024 694 B1**
(45) Date of publication and mention of the grant of the patent: **25.02.2004**
(21) Application number: 98949108.9
(22) Date of filing: 21.10.1998
(51) Int. Cl.: A01N 25/34, D06M 16/00

(54) **METHOD OF CONTROLLING HOUSE DUST MITES AND BEDMITES**
VERFAHREN ZUR BEKÄMPFUNG VON HAUSSTAUBMILBEN UND BETTMILBEN
PROCEDE DE CONTROLE DES ACARIENS DE LA POUSSIERE DE MAISON ET DES ACARIENS DU LIT

(30) Priority: 23.10.1997 GB 9722448
(43) Date of publication of application: 09.08.2000
(73) Proprietor: Acordis UK Limited, Spondon, Derby DE21 7DP (GB)
(72) Inventor: COX, Roland, Derby DE22 2XT (GB)
(74) Representative: Hale, Stephen Geoffrey
(86) International application number: PCT/GB1998/003137
(87) International publication number: WO 1999/021421

(56) References cited:
- EP-A- 0 047 553
- WO-A-97/24484
- GB-A- 2 309 461

## Description

### Field of the invention

This invention relates to a method of controlling house dust mites and bedmites (hereinafter HDM) in an article in which they proliferate in use of the article. HDM are typically Dermatophagoides spp., one species of particular significance being D. pteronyssinus.

A major food source for HDM is dead skin fragments (dander). Such fragments are continually shed by humans in considerable quantities. HDM proliferate in particular in bedding, including the fillings of pillows and mattresses, and in upholstered articles and fibrous floor coverings. HDM are xerophilic organisms which do not require liquid water, and they live in the absence thereof. They demand a high humidity environment, requiring a relative humidity (R.H.) of about 70 to 80 percent to survive. They absorb little water from the atmosphere and are effectively reliant on their food as the source of water. HDM typically excrete about 20 dung pellets per day. These pellets are very dry and brittle and are about 30 micron in size. They are readily broken up into particles about 1-10 micron in size. In the absence of free moisture, these particles readily acquire a positive static charge and become airborne. They are of respirable size and are accordingly able to enter the bronchial tubes of the human lung, where they become deposited on the mucus layer in the tubes and absorb water. The particles contain toxins, which are released when the particle is hydrated, and they can cause rapid allergic reactions, including bronchial inflammation and asthmatic symptoms. One such allergenic toxin of major importance is Der p I, which is a highly-stable water-soluble glycopeptide of molecular weight 30,000 derived from the digestive system of D. pteronyssinus.

Considerable effort has been expended in devising methods for controlling allergic reactions caused by the presence of HDM. One general method is the topical use of acaricides (the generic name for substances lethal to mites). Other methods rely upon control of the allergenic particles, for example by encasing them or by denaturing or destroying the allergens they contain. A further method relies on the topical application of fungicides. Dead skin fragments as shed have a very low moisture content and a high fat content. As such, they are a poor food source for HDM. Furthermore, HDM require a source of B-group vitamins. Certain microscopic fungi which thrive in the absence of liquid water (xerophilic fungi) grow on dead skin fragments, and they have the ability to absorb moisture from the atmosphere. In consequence, the moisture content of the fragments is raised; their fat content is reduced; and furthermore B-group vitamins and ergosterol, a precursor of vitamin D, are generated. All this makes the fragments a more suitable food source for HDM. Many such fungi belong to the Aspergillus glaucus and A. restrictus groups. Particular species include A. penicilloides and Eurotium repens (A. repens).

It is believed that Aspergillus spp). such as A. repens and A. penicilloides are not responsible per se for allergic reactions in humans of the kind induced by HDM.

Topical application of fungicides has the disadvantage that repeated treatment at regular intervals is required for continued control of HDM. Furthermore, fungicides are inherently toxic materials, and domestic topical application of such substances has been criticised for that reason. It is an object of the invention to provide a means of overcoming these disadvantages.

WO-A-97/24484 discloses a covering for beds and similar items equipped with a biocide against house dust mites, in particular an acaricide, the biocide being fixed in the covering. The biocide (acaricide) kills house dust mites directly. It is said to be applied as a coating layer on the covering in a mixture of the biocide with a bonding agent.

EP-A-0,047,553 discloses a method for combating and/or preventing allergic diseases which are caused by house dust mites by treating said mites, or places or areas which are afflicted or may be afflicted by said mites, with an effective amount of the fungicide natamycin. Preferably, a finely divided powder or a suspension of natamycin is sprayed on house-dust containing or bearing surfaces, for example room walls, room floors, furniture etc and more particularly mattresses, blankets, bed clothes, eiderdown quilts and the like.

### Disclosure of the invention

According to the invention there is provided a method of controlling house dust mites and bedmites in an article in which they proliferate in use of the article, by manufacturing the article using fibres to which a chemical compound having antifungal activity has previously been added, characterised in that the chemical compound has antifungal activity against fungi of the groups Aspergillus glaucus and/or A.restrictus, the fibres are manmade polymeric fibres, and the chemical compound is incorporated within the fibres during the course of their manufacture by inclusion in the fibre spinning dope, to provide a long-lasting antifungal effect which endures through laundering and which thereby controls house dust mites and bedmites in use of the article.

Particular species of such fungi include A. penicilloides and A. repens. A particular species of HDM is D.pteronyssinus. The chemical compound may exhibit fungicidal and/or fungistatic activity.

The fibres to which the chemical compound having antifungal activity is added are manmade polymeric fibres into which the chemical compound has been incorporated during the course of their manufacture. Such manmade polymeric fibres may be of a natural polymer such as cellulose or of a synthetic polymer such as an acrylic polymer based on polyacrylonitrile. Manmade fibres are described, for example, in a series of articles entitled "Fibers" in Ullmann's Encyclopaedia of Industrial Chemistry, 5^{th} edition (VCH Publishing), Vol. A10 (1987) and A11 (1988). Fibres are used for the manufacture of textile articles such as bedding fabrics (including sheets, blankets, pillowcases, mattress covers and the like), upholstery fabrics and floor coverings (carpets). Fibres are also used as filling materials in articles of bedding or upholstered articles such as pillows, mattresses, duvets and cushions, in which dander may accumulate and HDM thrive.

Insects such as HDM and mammals such as humans on the one hand and fungi such as Aspergillus spp. on the other hand belong to different taxonomic kingdoms. Many substances are known which are toxic to organisms within one kingdom but are effectively non-toxic to organisms within other kingdoms. The same is true, although to increasingly lesser degrees, between the lower taxonomic divisions beginning with phyla, classes and orders. It is an advantage of the invention that it can make use of antifungal compounds having low toxicity to higher mammals including humans and domestic animals and to other domestic pet creatures. The use of such compounds is accordingly preferred.

Acrylic fibres which incorporate neutral organic fungicidal compounds such as tolnaftate (which is a preferred compound), bifonazole, clotrimazole, miconazole, dichlorophene or hexachlorophene are disclosed in GB-A-2,309,461, and these fibres may be preferred in the invention. Another suitable compound is triclosan. The amount of the fungicidal compound in such fibres is preferably in the range from 0.01 to 2 percent by weight on the weight of fibre. Similar amounts of such fungicidal compounds are suitable also in other kinds of polymeric article of the invention.

Incorporation, of the antifungal compound within the manmade polymeric fibres during the course of their manufacture has the advantages that release of the compound into the environment is minimised and that the antifungal effect is long-lasting and endures throughout laundering and dry-cleaning. wet-spun acrylic fibres may have the advantage of a fissured structure, which both confers good moisture transport properties and assists diffusion of the antifungal compound to the fibre surface following depletion therefrom. The low moisture regain of synthetic fibres such as acrylic fibres may also be advantageous in maintaining a low humidity environment and thereby interfering with growth of Aspergillus spp. and HDM.

The invention is illustrated by the following Example, in which parts and proportions are by weight unless otherwise specified: -

### Example

This Example illustrates the fungicidal activity against A. repens of acrylic fibres which incorporate a fungicide and of the use of such fibres in controlling HDM.

Acrylic fibres containing 0.4% tolnaftate were prepared by a similar method to that disclosed in Example 1, of GB-A-2, 309, 461, the tolnaftate being incorporated within the fibres during the course of their manufacture by inclusion in the spinning dope. Such fibres are available commercially from Courtaulds Fibres (Holdings) Limited under the Trade Mark AMICOR AF. Acrylic fibres containing no antifungal agent (available from Courtaulds Fibres (Holdings) Limited under the Trade Mark COURTELLE) were used as control. The antimicrobial activity of the fibres was measured by the parallel streak method disclosed in Example 1 of GB-A-2, 309,461, but using a culture of A. repens (IMI 094150) containing ca. 3x10⁶ spores/ml. Test plates were incubated at 25°C for 4 days. The widths of inhibition zones of fungal growth were measured, and the results (overall range and in parenthesis the average of 12 measurements) are reported in the Table below:

**Table 1.**

| Width of inhibition zone | | |
|---|---|---|
| Control | Confluent growth in all Minimum mm | streaks on all plates Maximum mm |
| Fibre with tolnaftate | 0-2 (0.7) | 2-6 (3.9) |

Human skin (provided by a chiropodist) was sterilised, ground into fine fragments and wetted with synthetic perspiration. It was then used as a culture medium for A. repens. A needle punched nonwoven fabric of open structure was placed in a deep glass dish, to which was then added a known amount of the A. repens culture and fifty HDM. Sticky tape was affixed to the upper part of the dish wall to entrap HDM attempting to climb the wall. The dish was then cultured for eight weeks at room temperature and 75% R.H. The number of HDM stuck to the tape was recorded. Live HDM associated with the fabric were driven out by application of heat, and their number was recorded. The results shown in Table 2 were obtained (average of three cultures in each case).

**Table 2**

| Fabric | HDM on tape | HDM with fabric | Total |
|---|---|---|---|
| Amicor AF | 36.6 | 16.0 | 42.6 |
| Amicor AB | 21.7 | 1.3 | 23.0 |
| 50/50 Amicor AF/Amiccr AB | 11.3 | 2.3 | 13.6 |
| Courtelle | 32.3 | 46.0 | 78.3 |

AMICOR AB (Trade Mark of Courtaulds Fibres (Holdings) Limited) is an acrylic fibre containing triclosan made in similar manner to AMICOR AF.

The average number of HDM associated with the Amicor AF fabric may be distorted by an apparent rogue result; the individual numbers recorded.were 4, 9 and 35.

If a large number of HDM is found associated with the fabric, the presence of HDM on the tape suggests a thriving culture which is attempting to colonise other areas. If a small number of HDM is found associated with the fabric, the presence of HDM on the tape suggests an attempt by HDM to emigrate from a barren environment.

In comparative experiments, the same procedure was followed except that a synthetic food medium for HDM was used instead of the A. repens culture. HDM thrived on all the samples, and there was no significant difference in HDM numbers between any of the samples.

## Claims

1. A method of controlling house dust mites and bedmites in an article in which they proliferate in use of the article, by manufacturing the article using fibres to which a chemical compound having antifungal activity has previously been added, **characterised in that** the chemical compound has antifungal activity against fungi of the groups Aspergillus glaucus and/or A. restrictus, the fibres are manmade polymeric fibres, and the chemical compound is incorporated within the fibres during the course of their manufacture by inclusion in the fibre spinning dope, to provide a long-lasting antifungal effect which endures through laundering and which thereby controls house dust mites and bedmites in use of the article.

2. A method as claimed in claim 1, **characterised in that** the article is manufactured from fibres comprising a synthetic polymer.

3. A method as claimed in claim 2, **characterised in that** the article is manufactured from acrylic fibres.

4. A method as claimed in claim 3, **characterised in that** the acrylic fibres are wet-spun acrylic fibres.

5. A method as claimed in any of claims 1 to 4, **characterised in that** the fibres comprise a filling material and the article is an article of bedding or an upholstered article.

6. A method as claimed in any of claims 1 to 4, **characterised in that** the article is a textile fabric.

7. A method as claimed in claim 6, **characterised in that** the textile fabric is a bedding fabric.

8. A method as claimed in any of claims 1 to 4, **characterised in that** the article is a floor covering.

## Patentansprüche

1. Verfahren zur Bekämpfung von Hausstaub- und Bettmilben in einem Gegenstand, in dem sie sich bei dessen Gebrauch vermehren, bei dem man den Gegenstand unter Einsatz von Fasern herstellt, denen vorher eine chemische Verbindung mit antifungaler Wirkung zugesetzt wurde, **dadurch gekennzeichnet, daß** die chemische Verbindung gegen Pilze der Gruppen Aspergillus glaucus und/oder A. restrictus wirkt, daß man als Fasern Kunstfasern einsetzt und daß man die chemische Verbindung bereits bei der Herstellung der Fasern durch Zusatz zur Faserspinnmasse darin einarbeitet, wobei man einen auch gegenüber Waschen permanenten, nachhaltigen antifungalen Effekt erzielt, welcher bei Gebrauch des Gegenstandes eine Bekämpfung von Hausstaub- und Bettmilben bewirkt.

2. Verfahren nach Anspruch 1, **dadurch gekennzeichnet, daß** man den Gegenstand aus Fasern herstellt, die wenigstens teilweise aus einem synthetischen Polymer bestehen.

3. Verfahren nach Anspruch 2, **dadurch gekennzeichnet, daß** man den Gegenstand aus Acrylfasern herstellt.

4. Verfahren nach Anspruch 3, **dadurch gekennzeichnet, daß** man die Acrylfasern durch Naßspinnen herstellt.

5. Verfahren nach einem der Ansprüche 1 bis 4, **dadurch gekennzeichnet, daß** man Füllfasern einsetzt und einen zur textilen Bettausstattung vorgesehenen Gegenstand oder eine Polsterware herstellt.

6. Verfahren nach einem der Ansprüche 1 bis 4, **dadurch gekennzeichnet, daß** man als Gegenstand ein textiles Flächengebilde herstellt.

7. Verfahren nach Anspruch 6, **dadurch gekennzeichnet, daß** man als textiles Flächengebilde einen Bettwäschestoff oder ein zur Konfektionierung als Bettware bestimmtes textiles Flächengebilde herstellt.

8. Verfahren nach einem der Ansprüche 1 bis 4, **dadurch gekennzeichnet, daß** man als Gegenstand einen Bodenbelag herstellt.

## Revendications

1. Méthode de contrôle d'acariens de poussière domestique et d'acariens de literie dans un article dans lequel ils prolifèrent lors de l'utilisation de l'article, par la fabrication de l'article en utilisant des fibres auxquelles on a ajouté préalablement un composé chimique ayant une activité antifongique, **caractérisée en ce que** le composé chimique a une activité antifongique contre les champignons des groupes Aspergillus glaucus et/ou A. restrictus, les fibres étant des fibres polymères synthétiques, et le composé chimique est incorporé au sein des fibres lors de leur fabrication par une inclusion dans la solution de filage des fibres, pour fournir un effet antifongique de longue durée qui résiste au blanchissage et qui contrôle ainsi les acariens de poussière domestique et acariens de literie lors de l'utilisation de l'article.

2. Méthode selon la revendication 1, **caractérisée en ce que** l'article est fabriqué à partir de fibres comprenant un polymère synthétique.

3. Méthode selon la revendication 2, **caractérisée en ce que** l'article est fabriqué à partir de fibres acryliques.

4. Méthode selon la revendication 3, **caractérisée en ce que** les fibres acryliques sont des fibres acryliques filées à l'eau.

5. Méthode selon l'une quelconque des revendications 1 à 4, **caractérisée en ce que** les fibres comprennent un matériau d'emplissage et l'article est un article de literie ou un article rembourré.

6. Méthode selon l'une quelconque des revendications 1 à 4, **caractérisée en ce que** l'article est une étoffe textile.

7. Méthode selon la revendication 6, **caractérisée en ce que** l'étoffe textile est une étoffe de literie.

8. Méthode selon l'une quelconque des revendications 1 à 4, **caractérisée en ce que** l'article est un revêtement de sol.
